(19)

Europäisches Patentamt
European Patent Office
Office européen des brevets

(11) Numéro de publication : **0 178 966 B1**

# (12) FASCICULE DE BREVET EUROPÉEN

(45) Date de publication du fascicule du brevet : **13.04.88**

(51) Int. Cl.[4] : **F 16 D 65/56**

(21) Numéro de dépôt : **85401767.0**

(22) Date de dépôt : **11.09.85**

(54) **Entretroise de réglage automatique pour frein à tambour.**

(30) Priorité : **19.09.84 FR 8414331**

(43) Date de publication de la demande : **23.04.86 Bulletin 86/17**

(45) Mention de la délivrance du brevet : **13.04.88 Bulletin 88/15**

(84) Etats contractants désignés : **DE GB IT**

(56) Documents cités :
**EP-A- 0 077 726**
**EP-A- 0 104 102**
**DE-A- 2 508 614**
**DE-A- 2 951 473**
**FR-A- 2 224 673**
**US-A- 4 148 380**

(73) Titulaire : **BENDIX France**
**126, rue de Stalingrad**
**F-93700 Drancy (FR)**

(72) Inventeur : **Fidanza, Robert**
**10, Place Gabriel Péri**
**F-93150 Le Blanc-Mesnil (FR)**
Inventeur : **Denrée, Michel**
**10, Place Pluton**
**F-93600 Aulnay-sous-Bois (FR)**

(74) Mandataire : **Le Moenner, Gabriel et al**
**Division Technique Service Brevets Bendix Europe**
**126, rue de Stalingrad**
**F-93700 Drancy (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 178 966 B1

Jouve, 18, rue St-Denis, 75001 Paris, France

**Description**

La présente invention concerne les dispositifs de règlages automatiques destinés à compenser automatiquement l'usure des garnitures de friction des segments de frein, de freins à tambour et, plus particulièrement, une entretoise de règlage automatique pour frein à tambour, destinée à être montée entre deux segments du frein, l'entretoise comportant un corps d'entretoise métallique réalisé d'une seule pièce et un système à vis et écrou dont la vis est reçue dans un logement du corps d'entretoise et dont l'écrou coopère sélectivement avec un cliquet solidaire d'une lame élastique montée sur une face externe (27) sensiblement plane du corps d'entretoise.

Une entretoise de ce type est décrite dans le document EP-A-0077 726, au nom de la demanderesse, dont le contenu est supposé intégré ici pour référence.

Les corps d'entretoise de dispositifs de règlage automatique de freins à tambour sont généralement réalisés à partir d'un tube enroulé puis forgé, et généralement, découpé et usiné, l'ensemble de ces opérations se traduisant par des coûts de fabrication relativement élevés et également un rebutage d'un certain nombre de pièces non négligeable. De plus, dans le type d'entretoise considéré, le montage, sur le corps d'entretoise, de la lame élastique portant le cliquet présente également quelques difficultés et obère encore les coûts de fabrication de l'ensemble.

La présente invention a pour objet de proposer une entretoise de règlage automatique du type défini ci-dessus, de construction simple et peu onéreuse, convenant à des productions en grande série et facilitant l'adaptation de la lame élastique portant le cliquet coopérant avec l'écrou du système vis-écrou.

Pour ce faire, selon une caractéristique de l'invention, le corps d'entretoise est réalisé en fonderie et comporte au moins une protubérance faisant saillie par rapport à la face externe sensiblement plane et destinée à être reçue dans un orifice de la lame élastique pour le montage de la lame sur le corps d'entretoise par sertissage de ladite protubérance.

Les coûts de fabrication des corps d'entretoise réalisés à partir d'un tube forgé et mis en forme sont encore accrus quand il s'agit de prévoir, sur le corps d'entretoise, des moyens d'accrochage d'un ressort destiné à solliciter le corps d'entretoise vers l'âme du segment de frein correspondant.

Selon une autre caractéristique de l'invention, le corps d'entretoise comporte, au voisinage de son extrémité opposée à une tête d'extrémité élargie définissant intérieurement une partie du logement pour la vis du système à vis et écrou, une aile de prolongement se raccordant à la partie principale allongée du corps d'entretoise par une zone formant crochet d'accrochage d'un ressort destiné à être associé au segment de frein adjacent.

D'autres caractéristiques et avantages de la présente invention ressortiront de la description suivante d'un mode de réalisation, donné à titre illustratif mais nullement limitatif, faite en relation avec les dessins annexés sur lesquels :

la figure 1 est une vue schématique d'un agencement de dispositif de règlage automatique de frein à tambour comportant un corps d'entretoise selon l'invention ; et

la figure 2 est une vue en perspective du corps d'entretoise de la figure 1.

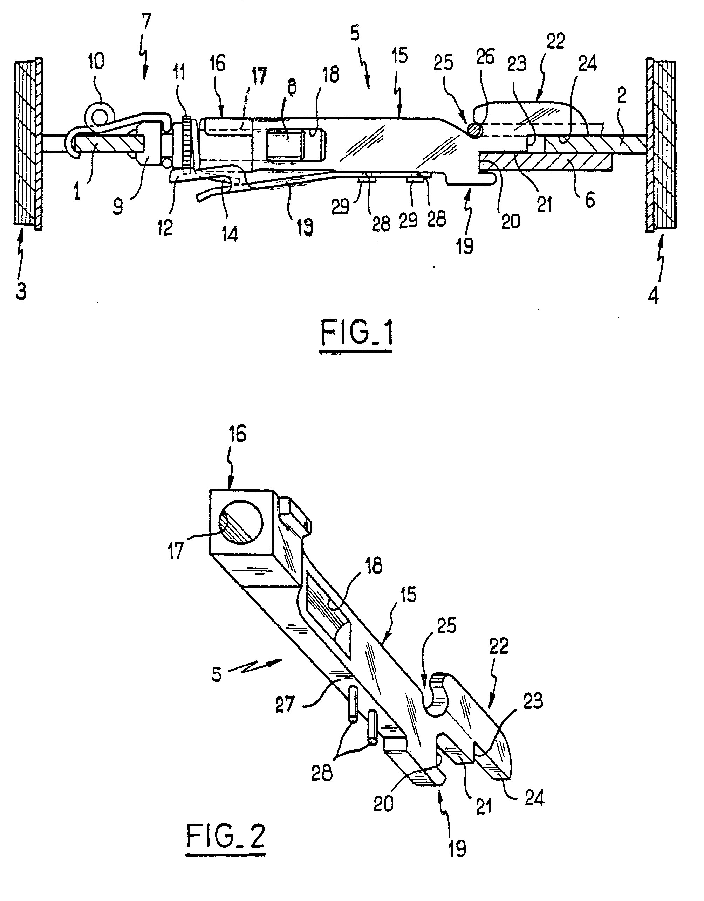

Comme on le voit sur la figure 1, et conformément à l'enseignement du document EP-A-077 726 sus mentionné, on a représenté une entretoise de règlage automatique disposée en appui par chacune de ses extrémités entre les âmes 1 et 2 de deux segments de freins 3 et 4, respectivement, d'un frein à tambour de véhicule automobile, l'entretoise de règlage automatique étant disposée typiquement au voisinage des moyens de serrage (non représentés) disposés également entre les deux segments 3 et 4 pour solliciter ces derniers en écartement en engagement de friction contre un tambour tournant du frein (également non représenté). L'entretoise de règlage automatique comprend, de façon générale, un corps d'entretoise 5, destiné à coopérer, par une de ses extrémités, avec l'âme 2 du segment de frein 4 et, typiquement, avec un levier 6 de frein à main du frein à tambour, et un système à vis et écrou 7 destiné à coopérer, par une de ses extrémités, avec l'âme 1 de l'autre segment de frein 3. Le système à vis et écrou 7 comporte une vis 8 pourvue d'une tête 9 maintenue en engagement, par un ressort 10, avec l'âme 1 du segment de frein 3, et un écrou 11 engagé sur la vis 8 et portant extérieurement une denture destinée à coopérer sélectivement avec un cliquet 12 solidaire d'une lame élastique 13 montée sur le corps d'entretoise 5. Comme on le verra plus avant, le cliquet 12 est normalement maintenu écarté de la denture de l'écrou 11 par un basculeur ou équerre de règlage 14 engagé librement sur la vis 8 et disposé entre l'écrou 11 et la face plane d'extrémité adjacente du corps d'entretoise 5, comme décrit dans le document EP-A-0077726 sus mentionné.

Conformément à l'invention, le corps d'entretoise 5 présente une configuration massive et est réalisé sans retouches d'une seule pièce en fonderie à partir d'un alliage métallique ductile et à bas point de fusion, typiquement en bronze coulé. Comme on le voit bien sur la Fig. 2, le corps d'entretoise 5 comporte une partie principale allongée en forme de poutre 15 de section sensiblement parallélipipédique terminée, à une extrémité, par une tête élargie 16 à section sensiblement carrée, traversée longitudinalement par un alésage 17 se prolongeant, dans la partie principale 15, au-delà de la tête d'extrémité 16, par une partie cylindrique 17 de même diamètre, partiellement fermée périphériquement, c'est-à-dire ayant une portion latérale ouverte résultant de la différence d'épaisseur entre la partie principale 15 et la tête d'extrémité 16. A l'opposé de la tête d'extrémité 16, la partie principale allongée 15 se termine, à sa partie inférieure (sur les dessins), par une partie formant crochet 19 destinée à recevoir la tranche du levier de frein à main 6 et définissant, pour ce dernier, un fond formant butée 20 et une face d'appui latérale 21. La partie principale allongée 15 se termine, à sa partie supérieure (sur les dessins), par une aile de prolongement 22 se raccordant avec la face 21 de la partie formant crochet 19 par un épaulement 23 et formant une face de contact longitudinal 24 pour une face adjacente de l'âme 2 du segment de frein correspondant 4. De plus, l'aile de prolongement 22 se raccorde à la partie supérieure de la partie principale allongée 15 par une zone formant crochet 25 destinée à recevoir un brin d'un ressort 26 accroché par ailleurs à l'âme 2 du segment de frein 4 pour solliciter en rapprochement ce dernier vers l'épaulement 23.

Selon une caractéristique de l'invention, la face inférieure 27 (sur les dessins) de la partie principale allongée 15 du corps d'entretoise 5 est sensiblement plane et comporte un, typiquement deux ergots 28 faisant saillie vers l'extérieur perpendiculairement à cette face 27, au voisinage de la partie formant crochet 19, et destinés à être reçus dans des trous correspondants 29 de la lame élastique 13, les ergots 28 étant venus directement de fonderie avec le corps d'entretoise 5. De cette façon, la lame 13 peut être montée très rapidement et avec une grande précision sur le corps d'entretoise 5 par simple sertissage, éventuellement avec chauffage, des extrémités des ergots 28, comme on le voit sur la Fig. 1. Le corps d'entretoise 5 peut être réalisé en fonderie d'une seule pièce avec une grande précision, notamment en ce qui concerne le logement 17, 18 destiné à recevoir la vis 8 du système à vis-écrou 7 sans nécessiter d'usinage ultérieur, et ce, avec une parfaite reproductibilité à grande échelle et en autorisant, notamment pour ce qui est de la partie d'aile de prolongement 22, une grande versatilité de formes et de dimensionnements convenant aux différents types de frein à tambour et de modes d'accrochage des ressorts 26.

On rappellera, pour mémoire, le mode de fonctionnement général du dispositif de réglage automatique de la Fig. 1. Au repos, le ressort (non représenté) qui sollicite les segments 3 et 4 l'un vers l'autre, sollicite le corps d'entretoise 5 et le système à vis et écrou 7 l'un vers l'autre en plaquant ainsi la rondelle de l'équerre de réglage 14 en appui, d'une part contre la face plane d'extrémité de la tête 16 du corps d'entretoise 5 et contre l'écrou adjacent 11. Ce faisant, le bras de l'équerre de réglage 14 dégage la lame élastique 13 de la face 27 du corps d'entretoise 5 et, partant, le cliquet 12 (solidaire de la lame 13 ou formé d'une seule pièce avec cette dernière) de la denture de l'écrou 11. Lors de la mise en œuvre des moyens de serrage du frein, les segments 3 et 4 sont sollicités en écartement l'un par rapport à l'autre, tendant ainsi à écarter l'un de l'autre le corps d'entretoise 5 et le système à vis et écrou 7, ce qui permet à la rondelle de l'équerre de réglage 14 de recouvrer une position inclinée par rapport à la vis 8 sur laquelle elle est montée et donc à la lame élastique 13 de se rapprocher élastiquement de la face 27 du corps d'entretoise 5 en emmenant le cliquet 12 en engagement avec la denture de l'écrou 11 et tendant à faire tourner celui-ci par rapport à la vis 8 jusqu'à ce que la lame 13 adopte sa configuration de repos par rapport au corps d'entretoise 5. Lorsque le freinage est relâché, les deux segments 3 et 4 se rapprochent de nouveau l'un de l'autre en tendant ainsi à contracter l'entretoise, ce qui provoque de nouveau le basculement de la rondelle de l'équerre de réglage 14 pour dégager le cliquet 12 de la denture de l'écrou 11.

**Revendications**

1. Entretoise de réglage automatique pour frein à tambour, destinée à être montée entre deux segments de freins (3,4), comportant un corps d'entretoise métallique (5) réalisé d'une seule pièce et un système à vis et écrou (7) dont la vis (8) est reçue dans un logement (17, 18) du corps d'entretoise et dont l'écrou (11) coopère sélectivement avec un cliquet (12) solidaire d'une lame élastique (13) montée sur une face externe (27) sensiblement plane du corps d'entretoise, caractérisée en ce que le corps d'entretoise (5) est réalisé en fonderie et comporte au moins une protubérance (28) faisant saillie par rapport à la face externe (27) sensiblement plane et destinée à être reçue dans un orifice (29) de la lame élastique (13) pour le montage de cette dernière sur le corps d'entretoise (5) par sertissage de ladite protubérance (28).

2. Entretoise selon la revendication 1, caractérisée en ce que le corps d'entretoise (5) comporte une partie principale allongée (15) de section sensiblement parallélipipédique et une tête d'extrémité élargie (16) de section sensiblement carrée, le logement pour la vis (8) comprenant une partie d'alésage fermée périphériquement (17) traversant la tête d'extrémité (16) et une partie cylindrique (18) partiellement fermée périphériquement se prolongeant dans la partie principale allongée (15) du corps d'entretoise (5).

3. Entretoise selon la revendication 2, caractérisée en ce que le corps d'entretoise (5) comporte, au voisinage de son extrémité opposée à la tête d'extrémité (16), une partie formant crochet (19) destinée à recevoir la tranche du levier de frein à main (6) du frein.

4. Entretoise selon la revendication 3, caractérisée en ce que l'extrémité du corps d'entretoise (5) opposée à la tête d'extrémité (16) est formée par une aile de prolongement (22) se raccordant par un épaulement (23) avec la partie formant crochet (19) et formant une face de contact (24) pour une face de l'âme (2) du segment de frein adjacent (4).

5. Entretoise selon la revendication 4, caractérisée en ce que l'aile de prolongement (22) se raccorde à la partie principale allongée (15) par une zone (25) formant crochet d'accrochage d'un ressort (26) associé audit segment de frein adjacent (4).

6. Entretoise selon l'une des revendications 3 à 5, caractérisée en ce que le corps d'entretoise (5) comprend deux protubérances en saillie (28) ménagées au voisinage de la partie formant crochet (19).

7. Entretoise selon l'une des revendications 1 à 6, caractérisée en ce que le corps d'entretoise (5) est réalisé en alliage à bas point de fusion.

8. Entretoise selon la revendication 7, caractérisée en ce que le corps d'entretoise (5) est réalisé en bronze.

**Claims**

1. Automatic adjustment strut for a drum brake, intended to be mounted between two brake shoes (3,4), incorporating a metal strut body (5) made as a single piece and a screw and nut system (7) the screw of which (8) is housed in a housing (17,18) in the strut body and the nut (11) of which cooperates selectively with a ratchet (12) which is firmly fixed to an elastic leaf (13) mounted on an essentially flat outside surface (27) of the strut body, characterized in that the strut body (5) is made by casting and incorporates at least one protuberance (28) projecting relative to the outside surface (27) which is essentially flat, the protuberance (28) being intended to enter a hole (29) in the elastic leaf (13) for mounting the latter on the strut body (5) by crimping the said protuberance (28).

2. Strut according to Claim 1, characterized in that the strut body (5) incorporates a main elongated portion (15) whose section is essentially in the shape of a parallelepiped, and the end in the form of an enlarged head (16) whose section is essentially square, the housing for the screw (8) incorporating a portion of a bore which is peripherally closed (17) passing through the headed end (16) and a cylindrical portion (18) which is partially peripherally closed extending into the main elongated portion (15) of the strut body (5).

3. Strut according to Claim 2, characterized in that the strut body (5) incorporates, in the region of its opposite end from the headed end (16), a portion forming a hook (19) intended to accept the edge of the hand brake lever (6) of the brake.

4. Strut according to Claim 3, characterized in that the opposite end of the strut body (5) from the headed end (16) is formed by an extended leg (22) joined by a shoulder (23) to the portion forming a hook (19) and forming a contact surface (24) for a surface of the web (2) of the adjacent brake shoe (4).

5. Strut according to Claim 4, characterized in that the extended leg (22) is joined to the main elongated portion (15) by a zone (25) forming a hook for attaching a spring (26) associated with the said adjacent brake shoe (4).

6. Strut according to one fo Claims 3 to 5, characterized in that the strut body (5) incorporates two projecting protuberances (28) arranged in the region of the portion forming a hook (19).

7. Strut according to one of Claims 1 to 6, characterized in that the strut body (5) is made of an alloy with a low melting point.

8. Strut according to Claim 7, characterized in that the strut body (5) is made of bronze.

**Patentansprüche**

1. Selbsttätig nachstellbare Druckstrebe für eine Trommelbremse, die zwischen zwei Bremsbacken (3,4) einsetzbar ist, mit einem metallischen, einteiligen Strebenkörper (5) und einer Schrauben-Mutter-Einrichtung (7), deren Schraube (8) von einer Aufnahme (17,18) des Strebenkörpers aufgenommen wird und dessen Mutter (11) wahlweise mit einer Klinke (12) zusammenwirkt, die mit einer elastischen Scheibe (13) fest verbunden ist, welche an einer im wesentlichen ebenen Außenseite (27) des Strebenkörpers angebracht ist, dadurch gekennzeichnet, daß der Strebenkörper (5) ein Gußteil ist und mindestens einen Vorsprung (28) aufweist, der von der im wesentlichen ebenen Außenseite (27) vorsteht und in einer Öffnung (29) der elastischen Scheibe (13) aufnehmbar ist, um die letztere an dem Strebenkörper (5) durch Stauchen des Vorsprunges (28) anzubringen.

2. Druckstrebe nach Anspruch 1, dadurch gekennzeichnet, daß der Strebenkörper (5) einen länglichen Hauptabschnitt (15) von im wesentlichen parallelepipedförmigem Querschnitt sowie einen vergrößerten Kopf (16) von im wesentlichen quadratischem Querschnitt aufweist, wobei die Aufnahme für die Schraube (8) einen den Kopf (16) durchquerenden, am Umfang geschlossenen Bohrungsabschnitt (17) sowie einen am Umfang teilweise geschlossenen zylindrischen Abschnitt (18) aufweist, der in den länglichen Hauptabschnitt (15) des Strebenkörpers (5) hinein verlängert ist.

3. Druckstrebe nach Anspruch 2, dadurch gekennzeichnet, daß der Strebenkörper (5) benachbart zu seinem den Kopf (16) entgegengesetzten Ende einen einen Haken bildenden Abschnitt (19) aufweist, der zur Aufnahme der Scheibe des Handbremshebels (6) der Bremse dient.

4. Druckstrebe nach Anspruch 3, dadurch gekennzeichnet, daß das dem Kopf (16) entgegengetzte Ende des Strebenkörpers (5) von einem flügelartigen Ansatz (22) gebildet wird, der sich mit einer Schulter (23) an dem den Haken bildenden Abschnitt (19) anschließt und eine Berührungsfläche (24) für eine Seite des Steges (2) der angrenzenden Bremsbacke (4) bildet.

5. Druckstrebe nach Anspruch 4, dadurch gekennzeichnet, daß sich der flügelartige Ansatz (22) an den länglichen hauptabschnitt (15) mit einem Bereich (25) anschließt, der einen Haken zum Einhängen einer der angrenzenden Brems-

backke (4) zugeordneten Feder (26) bildet.

6. Druckstrebe nach einem der Ansprüche 3-5, dadurch gekennzeichnet, daß der Strebenkörper (5) zwei Vorsprünge (28) aufweist, die in der Nähe des den Haken bildenden Abschnittes (19) vorgesehen sind.

7. Druckstrebe nach einem der Ansprüche 1-6, dadurch gekennzeichnet, daß der Strebenkörper (5) aus einer niedrigschmelzenden Legierung besteht.

8. Druckstrebe nach Anspruch 7, dadurch gekennzeichnet, daß der Strebenkörper (5) aus Bronze besteht.

7
10
11
16
17
8
18
5
15
25
26
23
22
24
2
1
9
12
14
13
29
28
29
28
19
20
21
6
3
4

FIG_1

16
17
18
15
25
22
23
5
27
28
20
21
24
19

FIG_2